# EUROPEAN PATENT APPLICATION

(11) **EP 1 515 013 A2**
(43) Date of publication of application: **16.03.2005**
(21) Application number: 04021624.4
(22) Date of filing: 10.09.2004
(51) Int. Cl.: F01N 3/025, F01N 3/035, F01N 9/00

(54) **Exhaust purifying apparatus of internal combustion engine**

(30) Priority: 12.09.2003 JP 2003321873
(71) Applicant: TOYOTA JIDOSHA KABUSHIKI KAISHA, Toyota-shi, Aichi 471-8571 (JP); Kabushiki Kaisha Toyota Jidoshokki, Kariya-shi, Aichi-ken (JP)
(72) Inventor: Otsubo, Yasuhiko, Toyota-shi Aichi-ken 471-8571 (JP); Ito, Takekazu, Toyota-shi Aichi-ken 471-8571 (JP); Yamada, Masaru, Kariya-shi Aichi-ken (JP)
(74) Representative: KUHNEN & WACKER

(57) **Abstract**

In an internal combustion engine (10), fuel is added to exhaust gas from a fuel adding valve (46) to increase the temperature of a catalyst bed of a PM trapping filter (26). The amount of fuel to be added to exhaust gas is corrected in accordance with the amount of particulate matter accumulated in the PM trapping filter (26). Therefore, the catalyst bed temperature is increased through a temperature increase process in a suitable manner.

## Description

### BACKGROUND OF THE INVENTION

The present invention relates to an exhaust purifying apparatus of an internal combustion engine that includes a filter for trapping particulate matter in exhaust gas and a catalyst for promoting oxidation of unburned fuel in exhaust gas. The apparatus executes a temperature increase process for increasing the temperature of a catalyst bed by supplying unburned fuel to the catalyst.

Some exhaust purifying apparatuses applied to an internal combustion engine such as a diesel engine include a particulate matter (PM) trapping filter for trapping particulate matter in exhaust gas. The PM trapping filter is located in an exhaust system of the internal combustion engine. In such an exhaust purifying apparatus, the PM trapping filter is likely to be clogged by accumulation of trapped particulate matter. Therefore, many of the exhaust purifying apparatuses include a catalyst for promoting oxidation of particulate matter to regenerate the PM trapping filter. A regeneration process of the PM trapping filter eliminates the clogging of the PM trapping filter by burning the trapped particulate matter.
During the regeneration process of the PM trapping filter, the temperature of a catalyst bed must be sufficiently high for activating the catalyst. Therefore, an exhaust purifying apparatus of an internal combustion engine disclosed in Japanese Laid-Open Patent Publication No. 11-336530 has been proposed. In the above exhaust purifying apparatus, a temperature increase process for increasing the temperature of the catalyst bed is executed by supplying unburned fuel to the catalyst.

According to the temperature increase process of the exhaust purifying apparatus disclosed in Japanese Laid-Open Patent Publication No. 11-336530, sub-injection of fuel to the combustion chamber is performed by the injector during an expansion stroke or an exhaust stroke after pilot injection or main injection of fuel to a combustion chamber from an injector so that fuel is combusted in the combustion chamber. The sub-injection is referred to as post injection or after injection. Most of fuel supplied to the combustion chamber by sub-injection is not combusted in the combustion chamber and is discharged to a discharge passage with exhaust gas and reaches the catalyst. That is, unburned fuel is supplied to the catalyst by executing the sub-injection. Components such as hydrocarbon (HC) and carbon monoxide (CO) in the unburned fuel supplied as described above are oxidized in the exhaust gas or on the catalyst and generate heat. Accordingly, the catalyst temperature is increased.

The exhaust purifying apparatus of the above publication No. 11-336530 detects the exhaust temperature in a section downstream the PM trapping filter during the temperature increase process. Then, a feedback control is performed to control the amount of fuel injected by the sub-injection, that is, the amount of unburned fuel supplied to the catalyst, based on the difference between the detected exhaust temperature and a target catalyst bed temperature. Therefore, the catalyst bed temperature is maintained to a level suitable for regenerating the PM trapping filter.

During the temperature increase process, the temperature of the catalyst need not be uniform in the entire PM trapping filter. Therefore, the particulate matter might be combusted during the temperature increase process at portions of the PM trapping filter where the temperature of the catalyst is high. The amount of heat generated when the particulate matter is combusted during the temperature increase process depends on the accumulation state of the particulate matter. Therefore, depending on the accumulation state of the particulate matter, the catalyst bed temperature might be excessively increased by the temperature increase process or the catalyst bed temperature after the execution of the temperature increase process might be lower than the target catalyst bed temperature. For example, when the amount of heat generated by the combustion of the particulate matter during the temperature increase process is great, the catalyst bed temperature is excessively increased by the temperature increase process, which excessively heats the catalyst.

### SUMMARY OF THE INVENTION

Accordingly, it is an objective of the present invention to provide an exhaust purifying apparatus of an internal combustion engine that increases the temperature of a catalyst bed through a temperature increase process in a suitable manner.

To achieve the foregoing and other objectives and in accordance with the purpose of the present invention, an exhaust purifying apparatus for an internal combustion engine is provided. The apparatus includes a filter, which traps particulate matter in exhaust gas, and a catalyst, which promotes oxidation of unburned fuel in exhaust gas. The apparatus performs a temperature increase process to increase a bed temperature of the catalyst by supplying unburned fuel to the catalyst. The apparatus further includes supply amount correcting means, which corrects the amount of unburned fuel to be supplied to the catalyst during the temperature increase process in accordance with the amount of particulate matter accumulated in the filter.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram illustrating an entire configuration of an internal combustion engine according to a first embodiment of the present invention;
Fig. 2 is a schematic diagram of the temperature distribution in the PM trapping filter during execution of the temperature increase process;
Fig. 3 is a graph showing the relationship between the accumulation amount of particulate matter and the catalyst bed temperature;
Fig. 4 is a cross-sectional view illustrating an output gas temperature sensor and the vicinity of the sensor;
Fig. 5 is a graph showing the relationship between the flow rate of exhaust gas and the output of the output gas temperature sensor;
Fig. 6 is a block diagram showing the logic for calculating the amount of fuel that should be added;
Fig. 7 is a graph showing the relationship between the intake air amount and a first correction value;
Fig. 8 is a graph showing the relationship between the accumulation amount of particulate matter and a second correction value;
Fig. 9 is a bar graph showing the catalyst bed temperature of the conventional exhaust purifying apparatus and the catalyst bed temperature of the exhaust purifying apparatus according to the first embodiment after the temperature increase process; and
Fig. 10 is a block diagram showing the logic for calculating the amount of fuel that should be added according to a second embodiment of the present invention.

### DETAILED DESCRIPTION OF THE PREFERRED EMBODIMENTS

Hereinafter, a first embodiment of the present invention will be described with reference to the drawings.

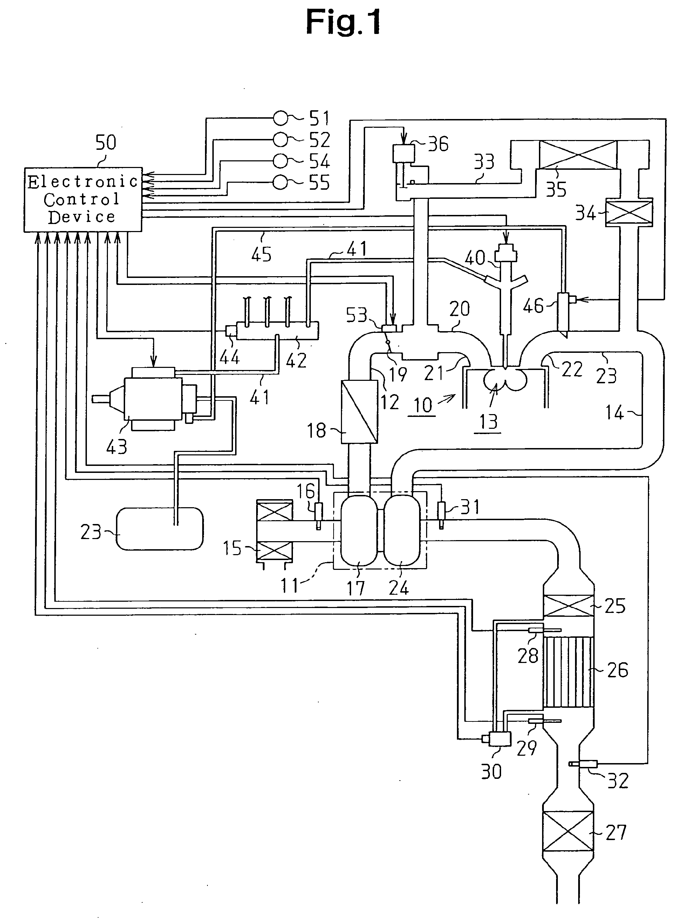

Fig. 1 illustrates the configuration of an internal combustion engine 10 to which the exhaust purifying apparatus according to the first embodiment is applied. The internal combustion engine 10 is a diesel engine having a common rail fuel injection device and a turbocharger 11. The internal combustion engine 10 includes an intake passage 12, combustion chambers 13, and an exhaust passage 14 as main components.

The intake passage 12 forms an intake system of the internal combustion engine 10. In the most upstream section of the intake passage 12, an air cleaner 15 is located. From the air cleaner 15 toward the downstream side, the air flow meter 16, a compressor 17 incorporated in the turbocharger 11, an intercooler 18, and an intake throttle valve 19 are provided in the intake passage 12. The intake passage 12 is branched at an intake manifold 20 located downstream of the intake throttle valve 19, and connected to each of the combustion chambers 13 of the internal combustion engine 10 through intake ports 21. An intake temperature sensor 55 is located downstream of the intercooler 18 in the intake passage 12. The intake temperature sensor 55 detects the temperature of the air introduced into the combustion chambers 13 (that is, the intake temperature).

In the exhaust passage 14, which forms an exhaust system of the internal combustion engine 10, an exhaust port 22 is connected to each combustion chamber 13. The exhaust ports 22 are connected to an exhaust turbine 24 of the turbocharger 11 through an exhaust manifold 23. In a section of the exhaust passage 14 that is downstream of the exhaust turbine 24, a NOx catalyst converter 25, a PM trapping filter 26, and an oxidation catalyst converter 27 are provided in this order from the upstream side to the downstream side.

The NOx catalyst converter 25 supports an occlusion-reduction NOx catalyst. The NOx catalyst occludes NOx (nitrogen oxide) in exhaust gas when the concentration of oxygen in exhaust gas is high, and emits the occluded NOx into exhaust gas when the concentration of oxygen in the exhaust gas is low. If the amount of unburned fuel components, which function as a reducing agent, about the catalyst is sufficient when NOx is emitted from the NOx catalyst, the emitted NOx is reduced. As a result, the exhaust gas is purified.

The PM trapping filter 26 is made of a porous material and traps particulate matter (PM) in exhaust gas. Like the NOx catalyst converter 25, the PM trapping filter 26 supports an occlusion-reduction NOx catalyst. The NOx catalyst of the PM trapping filter 26 also contributes to reduction of NOx in exhaust gas. The trapped particulate matter is combusted (oxidized) in a reaction that is promoted by the NOx catalyst.

The oxidation catalyst converter 27 supports an oxidation catalyst. The oxidation catalyst functions to oxide hydrocarbon (HC) and carbon oxide (CO) in exhaust gas to purify the exhaust gas.

In sections upstream of and downstream of the PM trapping filter 26 in the exhaust passage 14, an input gas temperature sensor 28 and an output gas temperature sensor 29 are provided, respectively. The input gas temperature sensor 28 detects an input gas temperature, which is the temperature of exhaust gas that flows into the PM trapping filter 26. The output gas temperature sensor 29 detects an output gas temperature, which is the temperature of exhaust gas that has passed through the PM trapping filter 26. Also, a differential pressure sensor 30 is provided in the exhaust passage 14. The differential pressure sensor 30 detects a pressure difference between a section upstream and a section downstream of the PM trapping filter 26. Oxygen sensors 31, 32 are located in a section of the exhaust passage 14 that is upstream of the NOx catalyst converter 25 and a section of the exhaust passage 14 between the PM trapping filter 26 and the oxidation catalyst converter 27, respectively. The oxygen sensors 31, 32 detect the concentration of oxygen in exhaust gas.

The internal combustion engine 10 further includes an exhaust gas recirculation device (EGR device) for returning some of exhaust gas to the intake passage 12. The EGR device includes an EGR passage 33 that connects the exhaust passage 14 with the intake passage 12. The most upstream part of the EGR passage 33 is connected to a section of the exhaust passage 14 that is upstream of the exhaust turbine 24. In the EGR passage 33, an EGR catalyst 34, an EGR cooler 35, and an EGR valve 36 are provided in this order from the upstream side to the downstream side. The EGR catalyst 34 reforms recirculated exhaust gas. The EGR cooler 35 cools the reformed exhaust gas. The EGR valve 36 adjusts the flow rate of the reformed and cooled exhaust gas. The most downstream part of the EGR passage 33 is connected to a section of the intake passage 12 that is downstream of the intake throttle valve 19.

An injector 40 is provided in each combustion chamber 13 of the internal combustion engine 10 to inject fuel to be combusted in the combustion chamber 13. The injectors 40 are connected to a common rail 42 with a high-pressure fuel pipe 41. High-pressure fuel is supplied to the common rail 42 through a fuel pump 43. The pressure of high-pressure fuel in the common rail 42 is detected by a rail pressure sensor 44 attached to the common rail 42. The fuel pump 43 is capable of supplying low-pressure fuel to a fuel adding valve 46 through a low-pressure fuel pipe 45.

Various control procedures of the internal combustion engine 10 are executed by an electronic control device 50. The electronic control device 50 includes a CPU that executes various computation processes related to control of the engine 10, a ROM storing programs and data necessary for the control, a RAM for temporarily storing the computation results of the CPU, and input and output ports for inputting and outputting signals from and to the outside.

In addition to the above described sensors, the input port of the electronic control device 50 is connected to an NE sensor 51 for detecting the rotation speed of the engine 10, an acceleration sensor 52 for detecting an acceleration manipulation amount, a throttle valve sensor 53 for detecting the opening degree of the intake throttle valve 19, and an outside temperature sensor 54 for detecting the outside temperature. The output port of the electronic control device 50 is connected to a drive circuit for driving the intake throttle valve 19, the EGR valve 36, the injector 40, the fuel pump 43, and the fuel adding valve 46.

Based on detected signals of the above described sensors, the electronic control device 50 grasps the operating condition of the engine 10. According to the grasped operating condition, the electronic control device 50 outputs command signals to the drive circuits of the devices connected to the output port. For example, the electronic control device 50 executes various control procedures such as control of the opening degree of the intake throttle valve 19, EGR control based on the opening degree control of the EGR valve 36, control of the amount, the timing and the pressure of fuel injection from the injector 40, and control related to fuel addition by the fuel adding valve 46.

In the internal combustion engine 10 of the first embodiment, a regeneration process for regenerating the PM trapping filter 26 and a process for eliminating sulfur poisoning of the NOx catalyst are executed as necessary to reliably maintain the performance of the internal combustion engine 10 in purifying exhaust gas. The purpose of the regeneration process of the PM trapping filter 26 is to combust and remove particulate matter trapped by the PM trapping filter 26 to prevent clogging of the PM trapping filter 26. The objective of the sulfur poisoning elimination process is to restore the NOx occlusion capacity of the NOx catalyst supported by the NOx catalyst converter 25 and the PM trapping filter 26, which capacity is lowered when the sulfur oxide (SOx) is occluded.

When performing the regeneration process of the PM trapping filter 26 and the sulfur poisoning elimination process, the catalyst bed temperature of the NOx catalyst converter 25 and the PM trapping filter 26 must be sufficiently high. When executing these processes, a temperature increase process is executed for increasing the catalyst bed temperature to a level suitable for regeneration of the PM trapping filter 26 and elimination of sulfur poisoning (for example 600°C to 700°C). The temperature increase process is executed when the following five requirements (a) to (e) are all satisfied.
(a) The regeneration of the PM trapping filter 26 or the sulfur poisoning elimination is demanded. The regeneration of the PM trapping filter 26 is demanded when, based on detected results of the differential pressure sensor 30, clogging of the PM trapping filter 26 is detected. The sulfur poisoning elimination is demanded when the amount of occluded SOx, which is computed based on the histories of operation of the engine 10, surpasses a predetermined value.
(b) The input gas temperature detected by the input gas temperature sensor 28 is greater than or equal to the minimum temperature A required for oxidation of fuel added by the fuel adding valve 46.
(c) The input gas temperature is less than the upper limit value B in a temperature range for avoiding excessive heating of the catalyst due to the heat generated in the temperature increase process.
(d) The output gas temperature detected by the output gas temperature sensor 29 is less than the upper limit value C in a temperature range for avoiding excessive heating of the catalyst due to the heat generated in the temperature increase process.
(e) Addition of fuel to exhaust gas is permitted. That is, the operating condition of the engine 10 permits the addition of fuel to exhaust gas. In principle, the addition of fuel to exhaust gas is permitted in the internal combustion engine 10 as long as the engine 10 is not stalling, the cylinders have been distinguished, and the depression degree of the acceleration pedal is not limited.

When the above requirements are all satisfied and the temperature increase process is started, the electronic control device 50 calculates the amount of fuel to be added to exhaust gas to increase the catalyst bed temperature of the NOx catalyst converter 25 and the PM trapping filter 26 to the target temperature based on the difference between the catalyst bed temperature estimated from the output gas temperature and the target catalyst bed temperature. Then, the electronic control device 50 continuously repeats addition of fuel to the exhaust gas from the fuel adding valve 46 at relatively short time intervals according to the calculated amount of fuel to be added.

When unburned fuel components such as hydrocarbon and carbon monoxide included in the fuel added to exhaust gas are supplied to the NOx catalyst converter 25 and the PM trapping filter 26, the unburned fuel components are oxidized in the exhaust gas or on the catalyst and generate heat. As a result, the catalyst bed temperature of the NOx catalyst converter 25 and the PM trapping filter 26 is increased.

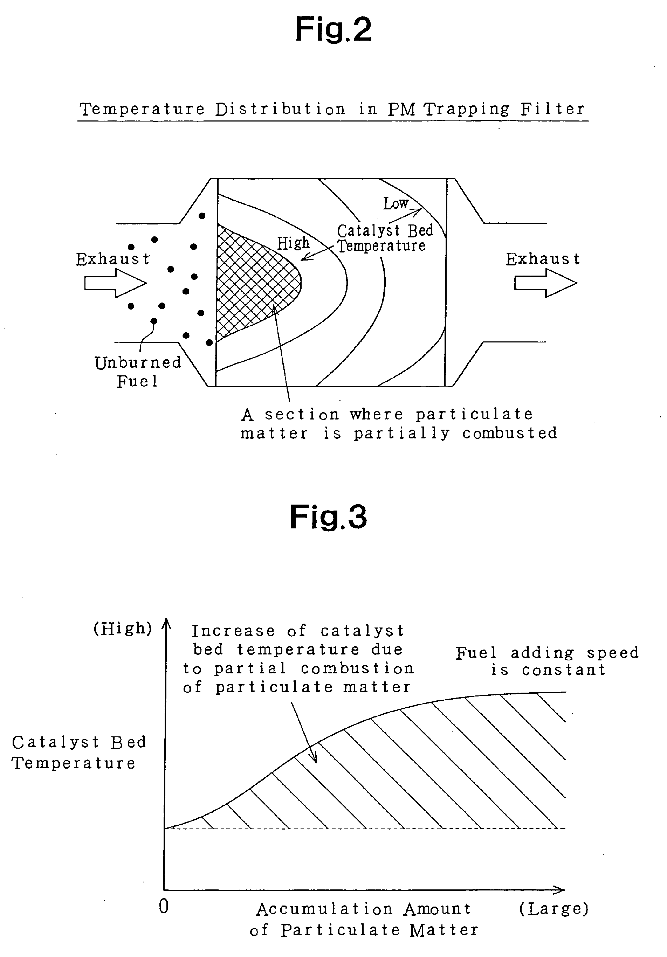

Fig. 2 is a schematic diagram of the temperature distribution in the PM trapping filter 26 during execution of the temperature increase process. Since the catalyst bed temperature in the entire PM trapping filter 26 does not increase uniformly, the temperature in the PM trapping filter 26 during the temperature increase process varies place by place as shown in Fig. 2. For example, at part of the PM trapping filter 26 in the vicinity of the inlet of the exhaust gas, the unburned fuel is supplied at an early stage and is oxidized. Therefore, the catalyst bed temperature at the part of the PM trapping filter 26 in the vicinity of the inlet of the exhaust gas increases earlier than the catalyst bed temperature of other portions. Thus, although the catalyst bed temperature of the entire PM trapping filter 26 has not reached the target temperature, the catalyst bed temperature of the part of the PM trapping filter 26 in the vicinity of the inlet of the exhaust gas is increased to a temperature greater than or equal to the target temperature. Accordingly, the particulate matter is partially combusted.

The amount of heat generated when the particulate matter is combusted during the temperature increase process depends on the accumulation state of the particulate matter in the PM trapping filter 26. For example, in a case where fuel is added to exhaust gas continuously at a constant speed, the amount of particulate matter combusted during the temperature increase process is increased as the amount of the particulate matter accumulated in the PM trapping filter 26 increases. The amount of heat generated is increased accordingly by the amount corresponding to the increase of the catalyst bed temperature due to the temperature increase process. Fig. 3 shows the relationship between the amount of particulate matter accumulated in the PM trapping filter 26 and the catalyst bed temperature after the temperature increase process in a case where fuel is added to exhaust gas continuously at a constant speed.

The output gas temperature detected by the output gas temperature sensor 29 is affected by the flow rate of exhaust gas around the output gas temperature sensor 29. Therefore, the output gas temperature detected by the output gas temperature sensor 29 might be deviated from the actual output gas temperature. Thus, if the catalyst bed temperature estimated from the detected output gas temperature is used as it is when calculating the amount of fuel to be added to exhaust gas during the temperature increase process, excess or deficiency might be caused in the amount of fuel to be added to exhaust gas due to the influence of the flow rate of the exhaust gas. The influence of the flow rate of the exhaust gas will be described below in detail.

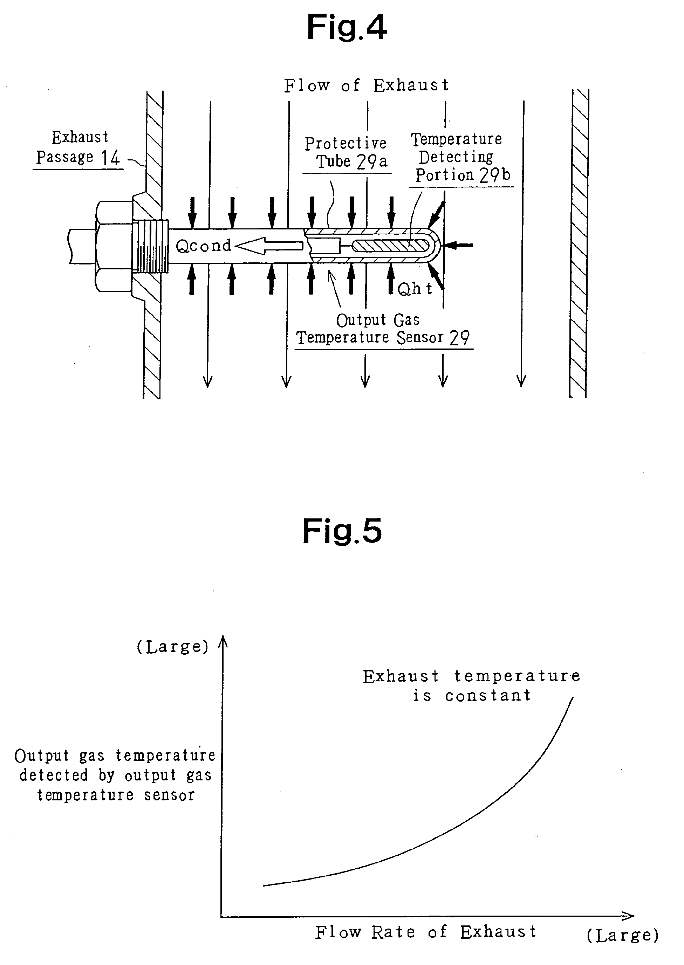

As shown in Fig. 4, the output gas temperature sensor 29 includes a protective tube 29a and a temperature detecting portion 29b. The protective tube 29a protrudes inward at a portion of the exhaust passage 14 downstream of the PM trapping filter 26. The temperature detecting portion 29b is accommodated in the distal end of the protective tube 29a. The temperature detecting portion 29b includes, for example, a thermocouple or a thermal element, and outputs an electric signal corresponding to the temperature of the distal end of the protective tube 29a.

The temperature of the distal end of the protective tube 29a detected by the temperature detecting portion 29b is determined by the balance between the heat transfer amount Qₕₜ, which is the amount of heat transferred from exhaust gas to the output gas temperature sensor 29, and the heat conduction amount Q_{cond}, which is the amount of heat conducted from the output gas temperature sensor 29 to the outside via the protective tube 29a, or the like. The heat transfer amount Qₕₜ is determined by the difference between the temperature of the exhaust gas and the temperature of the output gas temperature sensor 29 and the flow rate of exhaust gas. The heat conduction amount Q_{cond} is determined by the difference between the temperature of the output gas temperature sensor 29 and the temperature of the outside. The heat transfer amount Qₕₜ is increased as the flow rate of exhaust gas increases. Therefore, as shown in Fig. 5, the temperature of the distal end of the protective tube 29a detected by the temperature detecting portion 29b, or the output gas temperature detected by the output gas temperature sensor 29, is increased as the flow rate of exhaust gas increases although the exhaust temperature is constant.

As described above, the amount of heat generated in the PM trapping filter 26 during the temperature increase process is influenced by the amount of particulate matter accumulated in the PM trapping filter 26. Therefore, the amount of the particulate matter accumulated in the PM trapping filter 26 might cause excess or deficiency in the amount of fuel to be added to exhaust gas. Also, an error of the detected value of the output gas temperature sensor 29 due to the influence of the flow rate of exhaust gas might cause excess or deficiency in the amount of fuel to be added to exhaust gas.

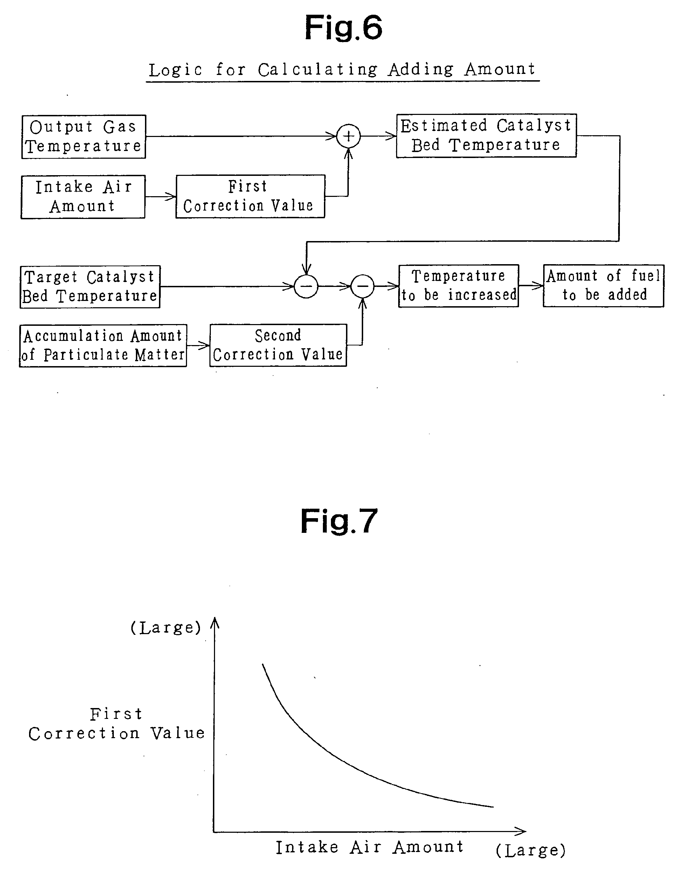

When excessive fuel is added to exhaust gas, the NOx catalyst is excessively heated, which degrades the purifying performance of the catalyst. Therefore, in the first embodiment, the amount of fuel to be added to exhaust gas during the temperature increase process is calculated taking into consideration of the influence of the accumulation amount of the particulate matter and the flow rate of exhaust gas. The calculation method will now be described with reference to Figs. 6 to 9.

During the temperature increase process, the electronic control device 50 calculates the amount of fuel to be added to exhaust gas according to the logic shown in Fig. 6. The calculated amount of fuel is added to exhaust gas from the adding valve 46. As shown in Fig. 6, the electronic control device 50 obtains first and second correction values when calculating the amount of fuel to be added to exhaust gas. The first correction value is used to compensate for the error of the detected value of the output gas temperature sensor 29 due to the influence of the flow rate of exhaust gas. The first correction value is calculated based on the intake air amount that has a one-to-one relationship with the flow rate of exhaust gas. The second correction value is used to compensate for the heat generated by a partial combustion of the particulate matter in the PM trapping filter 26 during the temperature increase process. The second correction value is calculated based on the amount of particulate matter accumulated in the PM trapping filter 26. The amount of particulate matter accumulated in the PM trapping filter 26 is estimated from the operation condition of the engine, such as the engine rotation speed, the engine load, and the input gas temperature.

The electronic control device 50 calculates the estimated catalyst bed temperature by adding the first correction value to the output gas temperature detected by the output gas temperature sensor 29. Subsequently, the electronic control device 50 obtains the difference between the estimated catalyst bed temperature and the target catalyst bed temperature and subtracts the second correction value from the difference. From the above described calculation, the temperature of the catalyst that needs to be increased by adding the fuel to exhaust gas is obtained. According to the temperature that needs to be increased, the amount of fuel to be added is calculated.

Fig. 7 is a graph showing the relationship between the intake air amount and the first correction value. As shown in Fig. 7, the first correction value is decreased as the intake air amount increases, that is, as the flow rate of exhaust gas increases. As described above, when the flow rate of exhaust gas is small, the amount of heat transferred from exhaust gas to the output gas temperature sensor 29 is small. Therefore, the output gas temperature detected by the output gas temperature sensor 29 is less than the actual output gas temperature by a large degree. In this case, the estimated catalyst temperature is calculated by adding a relatively great first correction value to the output gas temperature detected by the output gas temperature sensor 29. Therefore, the correction using the first correction value prevents the output gas temperature detected by the output gas temperature sensor 29 from deviating from the actual output gas temperature.

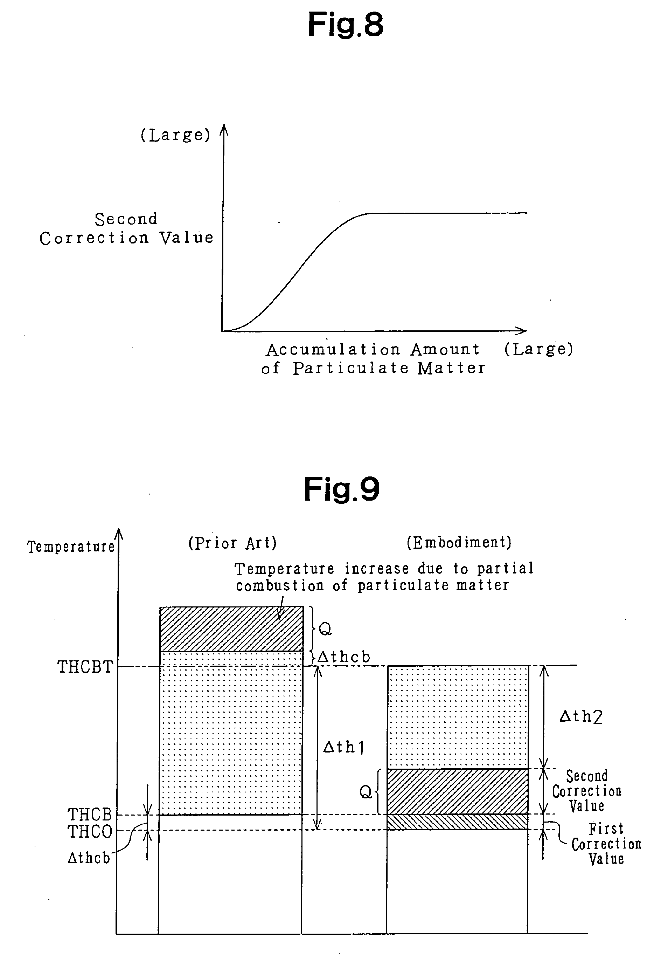

Fig. 8 is a graph showing the relationship between the intake air amount and the second correction value. As shown in Fig. 8, the second correction value is increased as the amount of particulate matter accumulated in the PM trapping filter 26 increases, that is, as the amount of heat generated in the PM trapping filter 26 during the temperature increase process increases. Therefore, when the amount of accumulated particulate matter is great, a relatively great second correction value is subtracted from the difference between the estimated catalyst bed temperature and the target catalyst bed temperature to obtain the temperature of the catalyst to be increased by adding fuel. Thus, the amount of fuel to be added to exhaust gas is adjusted in accordance with the amount of heat generated in the PM trapping filter 26 during the temperature increase process.

Fig. 9 is a bar graph showing the catalyst bed temperature of the conventional exhaust purifying apparatus, which calculates the amount of fuel to be added to exhaust gas without using the first and second correction values, and the catalyst bed temperature of the exhaust purifying apparatus according to the first embodiment after the temperature increase process. In the conventional exhaust purifying apparatus, fuel is added to exhaust gas by the amount that is necessary and sufficient for increasing the catalyst bed temperature by the difference Δth1 between the detected value THCO of the output gas temperature sensor 29 and the target catalyst bed temperature THCBT. However, as described above, the detected value THCO of the output gas temperature sensor 29, that is, the output gas temperature detected by the output gas temperature sensor 29 includes an error Δthcb due to the influence of the flow rate of exhaust gas. Thus, the detected value THCO of the output gas temperature sensor 29 is less than the actual catalyst bed temperature by the amount corresponding to the error Δthcb. Therefore, when the catalyst bed temperature is increased by the difference Δth1 in the temperature increase process, the catalyst bed temperature after the temperature increase process becomes greater than the target catalyst bed temperature THCB by the error Δthcb. When the particulate matter is partially combusted in the PM trapping filter 26 during the temperature increase process, the catalyst bed temperature after the temperature increase process becomes further greater than the target catalyst bed temperature THCBT by the temperature increase Q due to the combustion.

On the other hand, in the exhaust purifying apparatus according to the first embodiment, the estimated catalyst bed temperature THCB closer to the actual catalyst bed temperature than the detected value THCO is obtained by adding the first correction value, which corresponds to the error Δthcb, to the detected value THCO of the output gas temperature sensor 29. Then, fuel is added to exhaust gas by the amount that is necessary and sufficient for increasing the catalyst bed temperature by a value Δth2 obtained by subtracting the second correction value, which corresponds to the temperature increase Q, from the difference between the estimated catalyst bed temperature THCB and the target catalyst bed temperature THCBT. Therefore, the catalyst bed temperature after the temperature increase process substantially coincides with the target catalyst bed temperature THCBT regardless of the error Δthcb caused by the influence of the flow rate of exhaust gas and the combustion of the particulate matter during the temperature increase process.

In the first embodiment, the logic shown in Fig. 6 is executed by the electronic control device 50, which functions as first and second supply amount correcting means and exhaust temperature correcting means. The correction of difference between the estimated catalyst bed temperature and the target catalyst bed temperature by the second correction value corresponds to a correction executed by the first supply amount correcting means. The correction of the output gas temperature detected by the output gas temperature sensor 29 by the first correction value corresponds to a correction executed by the second supply amount correcting means and the exhaust temperature correcting means. Also, the output gas temperature detected by the output gas temperature sensor 29 corresponds to the catalyst bed temperature obtained based on the detected exhaust temperature and the estimated catalyst bed temperature corresponds to the corrected catalyst bed temperature.

The preferred embodiment provides the following advantages.

The estimated catalyst bed temperature used instead of the actual catalyst bed temperature when calculating the amount of fuel to be added to exhaust gas during the temperature increase process is obtained by correcting the output gas temperature detected by the output gas temperature sensor 29 based on the intake air amount, which is an indicator of the flow rate of exhaust gas. Thus, the estimated catalyst bed temperature is a value obtained by eliminating the error due to the flow rate of exhaust gas from the output gas temperature detected by the output gas temperature sensor 29 and is closer to the actual catalyst bed temperature than the output gas temperature detected by the output gas temperature sensor 29. Therefore, the amount of fuel to be added to exhaust gas calculated using the estimated catalyst bed temperature is the amount necessary and sufficient for increasing the catalyst bed temperature to the target catalyst bed temperature.

Calculating the amount of fuel to be added to exhaust gas during the temperature increase process includes correcting the difference between the estimated catalyst bed temperature and the target catalyst bed temperature based on the accumulated amount of the particulate matter in the PM trapping filter 26. Therefore, even if the particulate matter is combusted in the PM trapping filter 26 during the temperature increase process, an appropriate amount of unburned fuel is supplied to the NOx catalyst and the NOx catalyst is heated in a suitable manner.

Hereinafter, a second embodiment of the present invention will be described with reference to the drawings.

In the first embodiment, the amount of fuel to be added to exhaust gas is calculated by referring to the output gas temperature detected by the output gas temperature sensor 29, which is located at a section of the exhaust passage 14 downstream of the PM trapping filter 26. However, in the second embodiment, the amount of fuel to be added to exhaust gas is calculated by referring to the input gas temperature detected by the input gas temperature sensor 28, which is located at a section of the exhaust passage 14 upstream of the PM trapping filter 26, that is, by referring to the detection value of the input gas temperature sensor 28. In this case, the increase of the catalyst bed temperature due to the combustion of the particulate matter in the PM trapping filter 26 is not reflected in the detection value of the input gas temperature sensor 28. Therefore, the detection value of the input gas temperature sensor 28 is deviated from the actual catalyst bed temperature.

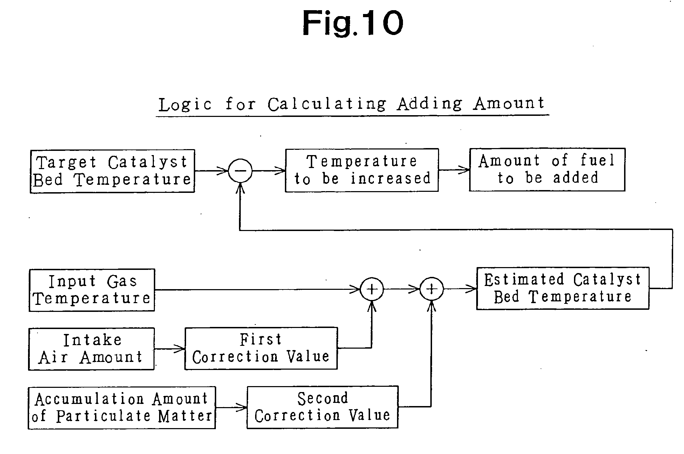

In the second embodiment, the amount of fuel to be added to exhaust gas is calculated in accordance with the logic shown in Fig. 10 during the temperature increase process. The calculated amount of fuel is added to exhaust gas from the adding valve 46.

As shown in Fig. 10, when calculating the amount of fuel to be added to exhaust gas, the electronic control device 50 calculates the estimated catalyst bed temperature by adding first and second correction values to the input gas temperature detected by the input gas temperature sensor 28. Subsequently, the electronic control device 50 obtains the difference between the estimated catalyst bed temperature and the target catalyst bed temperature. From the above described calculation, the temperature of the catalyst that needs to be increased by adding fuel to exhaust gas is obtained. According to the temperature that needs to be increased, the amount of fuel to be added is calculated. The second embodiment has the same advantages as the first embodiment.

The above mentioned embodiments may be modified as follows.

In the first embodiment, the output gas temperature detected by the output gas temperature sensor 29 is corrected using the first correction value. Then, the amount of fuel to be added to exhaust gas is calculated based on the corrected value. However, the amount of fuel to be added may be calculated based on the output gas temperature detected by the output gas temperature sensor 29 first. Then, the calculated value may be corrected using the first correction value. Also, in the first embodiment, the difference between the estimated catalyst bed temperature and the target catalyst temperature is corrected using the second correction value. Then, the amount of fuel to be added to exhaust gas is calculated based on the corrected value. However, the amount of fuel to be added to exhaust gas may be calculated based on the difference between the estimated catalyst bed temperature and the target catalyst bed temperature first. Then, the calculated value may be corrected using the second correction value.

In the second embodiment, the input gas temperature detected by the input gas temperature sensor 28 is corrected using the first and second correction values. Then, the amount of fuel to be added to exhaust gas is calculated based on the corrected value. However, the amount of fuel to be added may be calculated based on the input gas temperature detected by the input gas temperature sensor 28 first. Then, the calculated value may be corrected using the first and second correction values.

In the first and second embodiments, the intake air amount detected by the air flow meter 16 is used as an indicator of the flow rate of exhaust gas. Contrarily, the flow rate of exhaust gas may be measured and the measurement value may be used instead of the intake air amount. Alternatively, the flow rate of exhaust gas may be estimated from the operation condition of the engine such as the engine rotation speed and the engine load and the estimated value may be used instead of the intake air amount.

When the difference between the detection value of the output gas temperature sensor 29 and the actual output gas temperature or the difference between the detection value of the input gas temperature sensor 28 and the actual input gas temperature is so small that the difference can be ignored, the correction using the first correction value may be omitted and only the correction using the second correction value may be performed.

In the first and second embodiments, the unburned fuel is supplied to the catalyst by adding fuel to exhaust gas from the adding valve 46 but fuel may be added by other means. For example, the unburned fuel may be supplied to the catalyst by sub-injection of fuel to each combustion chamber 13 from the corresponding injector 40, which is referred to as post injection or after injection. The sub-injection is executed during an expansion stroke or an exhaust stroke after the fuel to be combusted in the combustion chamber 13 is injected from the injector 40. In this case, the amount of fuel to be sub-injected is calculated in accordance with the logic that is the same as the logic shown in Fig. 6 or 10.

The exhaust purifying apparatus of the above embodiments may be incorporated in an internal combustion engine that has components different from those of the internal combustion engine shown in Fig. 1.

The present examples and embodiments are to be considered as illustrative and not restrictive and the invention is not to be limited to the details given herein, but may be modified within the scope and equivalence of the appended claims.

## Claims

1. An exhaust purifying apparatus for an internal combustion engine (10), the apparatus comprising a filter (26), which traps particulate matter in exhaust gas, and a catalyst, which promotes oxidation of unburned fuel in exhaust gas, wherein the apparatus performs a temperature increase process to increase a bed temperature of the catalyst by supplying unburned fuel to the catalyst, the apparatus being
**characterized by:**
supply amount correcting means, which corrects the amount of unburned fuel to be supplied to the catalyst during the temperature increase process in accordance with the amount of particulate matter accumulated in the filter.

2. The exhaust purifying apparatus according to claim 1, **characterized in that** the catalyst is supported by the filter or located upstream of the filter.

3. The exhaust purifying apparatus according to claim 1 or 2, **characterized in that** the supply amount correcting means corrects the amount of unburned fuel to be supplied to the catalyst such that the amount of unburned fuel to be supplied to the catalyst is decreased as the amount of particulate matter accumulated in the filter increases.

4. The exhaust purifying apparatus according to claim 1 or 2, **characterized in that** the amount of unburned fuel to be supplied to the catalyst is calculated based on the difference between the catalyst bed temperature and the target catalyst bed temperature, wherein the correction of the amount of unburned fuel to be supplied to the catalyst by the supply amount correcting means is performed by correcting the difference between the catalyst bed temperature and the target catalyst bed temperature in accordance with the amount of particulate matter accumulated in the filter.

5. The exhaust purifying apparatus according to claim 4, **characterized in that** the supply amount correcting means corrects the difference such that the difference is decreased as the amount of particulate matter accumulated in the filter increases.

6. The exhaust purifying apparatus according to any one of claims 1 to 5, **characterized in that** the amount of unburned fuel to be supplied to the catalyst is calculated from a detected exhaust temperature, wherein the supply amount correcting means is first supply amount correcting means, and the exhaust purifying apparatus further comprises second supply amount correcting means, which further corrects the amount of unburned fuel to be supplied to the catalyst in accordance with the flow rate of exhaust gas.

7. The exhaust purifying apparatus according to claim 6, **characterized in that** the second supply amount correcting means corrects the amount of unburned fuel to be supplied to the catalyst such that the amount of unburned fuel to be supplied to the catalyst is decreased as the flow rate of exhaust gas decreases.

8. The exhaust purifying apparatus according to any one of claims 1 to 5, **characterized by** exhaust temperature correcting means, which corrects the catalyst bed temperature obtained from the detected exhaust temperature in accordance with the flow rate of exhaust gas, wherein the amount of unburned fuel to be supplied to the catalyst is calculated based on the difference between the corrected catalyst bed temperature and the target catalyst temperature.

9. The exhaust purifying apparatus according to claim 8, **characterized in that** the exhaust temperature correcting means corrects the catalyst bed temperature obtained from the detected exhaust temperature such that the catalyst bed temperature is increased as the flow rate of exhaust gas decreases.

10. The exhaust purifying apparatus according to any one of claims 6 to 9, **characterized in that** the flow rate of exhaust gas is calculated from the intake air amount.

11. The exhaust purifying apparatus according to any one of claims 1 to 10, **characterized in that** the supply of unburned fuel to the catalyst is performed by adding fuel to exhaust gas from an adding valve (46), which is arranged at a section of an exhaust passage (14) of the internal combustion engine located upstream of the filter and the catalyst.

12. The exhaust purifying apparatus according to any one of claims 1 to 10, **characterized in that** the supply of unburned fuel to the catalyst is performed by sub-injection of fuel to a combustion chamber (13) of the internal combustion engine from an injector (40) of the internal combustion engine, wherein the sub-injection is performed during an expansion stroke or an exhaust stroke after the fuel to be combusted in the combustion chamber is injected from the injector.
